# EUROPEAN PATENT SPECIFICATION

(11) **EP 3 475 560 B1**
(45) Date of publication and mention of the grant of the patent: **15.04.2020**
(21) Application number: 17751853.7
(22) Date of filing: 20.06.2017
(51) Int. Cl.: F03D 5/00

(54) **SYSTEM FOR GENERATING ELECTRIC ENERGY BY EXPLOITING WIND AT A HEIGHT**
SYSTEM ZUR ERZEUGUNG ELEKTRISCHER ENERGIE DURCH AUSNUTZUNG DES WINDS AUF HÖHE
SYSTÈME POUR PRODUIRE L'ÉNERGIE ÉLECTRIQUE EN EXPLOITANT LE VENT À HAUTEUR

(30) Priority: 28.06.2016 IT UA20164728
(43) Date of publication of application: 01.05.2019
(73) Proprietor: Sequoia IT S.R.L., 10024 Moncalieri (IT)
(72) Inventor: VERGNANO, Giovanni, 10024 Moncalieri (TO) (IT)
(74) Representative: Garavelli, Paolo
(86) International application number: PCT/IT2017/000122
(87) International publication number: WO 2018/002961

(56) References cited:
- WO-A1-2010/141753
- FR-A1- 2 381 921
- SU-A1- 1 250 697
- US-A- 4 165 468
- US-A- 4 207 026
- US-A1- 2008 296 905
- US-B1- 7 582 981

## Description

The present invention refers to a system for generating electric energy by exploiting wind at a height. Specifically, the invention deals with an implementation of the wind capitation technique with lightweight wing profiles "rotating" around their own axis (also rotor) and characterized by the chance of being "retractable", namely "extended" or "compressed" in a central body/room. The rotation of the wing profiles, induced by wind, generates a force (lift) aligned to the rotation axis and whose direction is opposite to the constraint point of the system. Between the wind direction and the rotation axis an angle will be formed, induced by the cyclic modification of the wing profiles during the rotation, which keeps the system at a height. The transfer to the ground of energy produced by the system occurs through a constraining cable which, through a suitable pulley, connects the rotor, placed at a height, to a generator of electric energy or another similar system, placed on the ground. Recovery (descent) steps down to the starting height of the cycle must be alternated with traction steps, with the rotor rising at a height.

The term lightweight profiles means the aerodynamic shapes which deploy and keep or modify their own wing profile due to the help of tie-rods.

Some prior documents exist, WO2007000788, US4832571, US802144, US704507, but none of such documents uses the innovative feature of the present invention, which allows obtaining better performances when generating electric energy with rotating lightweight profiles. The document US2008/296905 describes another known device.

Object of the present invention is solving the above prior art problems, by providing the following advantages and scopes:
- facilitating the "recovery" step at the starting height of the working cycle of lightweight wing profiles, rotating on their own axis, which, due to traction, produce electric energy through a generator placed on the ground;
- regulating/controlling, depending on wind intensity, the "working" surface for capturing wind energy (namely the surface exposed to wind) by the rotating wing profiles;
- increasing the range of wind speeds which can be used to generate electric energy, since, in case of strong winds, it is possible to "reduce" the wing surface of the system and the parts which remain exposed to wind can be composed of stronger materials.

The above and other objects and advantages of the invention, as will result from the following description, are obtained with a system for generating electric energy by exploiting wind at a height as claimed in claim 1.

Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:
- Figures 1, 1a show an example embodiment of the system according to the present invention, with "total" opening of the rotating wing profile;
- Figures 2, 2a show an example embodiment of the system according to the present invention, with "partial" opening of the rotating wing profile;
- Figures 3, 3a show an example embodiments of the system according to the present invention, with "no" opening of the rotating wing profile;
- Figure 4 shows a complete example embodiment of the system according to the present invention, with connection of the rotating wing profile to an electric energy generator placed on the ground.

With reference to the Figures, the invention deals with a system (1) for generating electric energy by exploiting wind at a height.

Specifically, the invention deals with an innovative system (1) equipped with special wing profiles "rotating" around their own axis and "retractable", namely variably extendible, thereby obtaining the chance of changing the working surface for exploiting wind.

Such system (1) mainly comprises:
- at least one ultra-light component of the "kite" type, such as to have an aerodynamic shape for which wind induces a rotation around its own axis creating a lift (for example like the blades of an helicopter); the "rotating kite" is mainly composed of two or more "retractable" wing profiles (11, 12) which can be extended or reduced (elongated or shortened), totally or partially, through means (mechanical and/or electromechanical) placed inside a central room/body (13) belonging to the rotating kite.

In this way, thanks of being able to extend or reduce (elongate or shorten) the wing profiles (11, 12), a functional improvement can be obtained in the rise and descent steps (where there is no risk of worsening for the cables which control the shape of the wing profiles), and it will also be possible to regulate/control the working surface (namely the wing surface which can be exploited by wind) of the wing profiles (11, 12), depending on wind intensity, thereby improving the performances of the system (1).

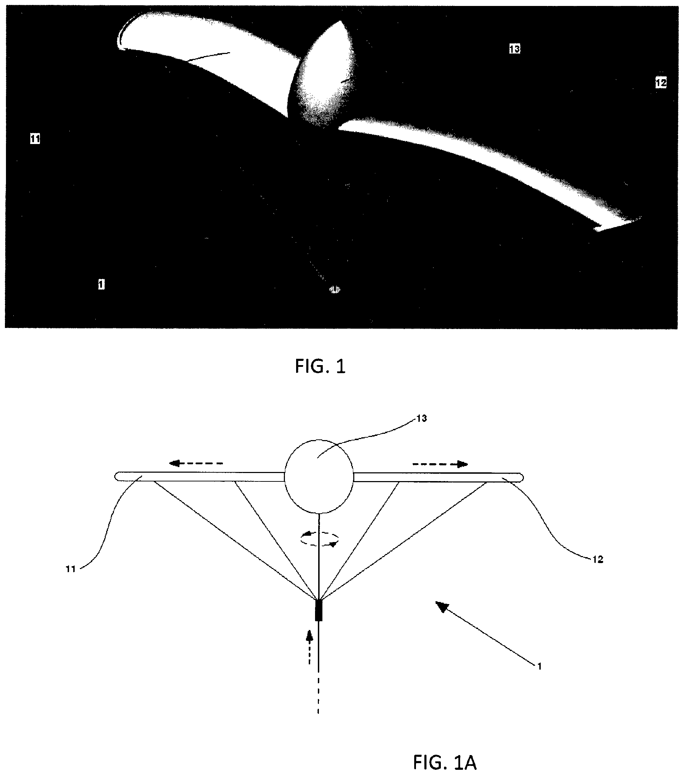

When there is wind, the wing profiles (11, 12) are "totally" opened (Figures 1, 1a), namely are completely extended, elongated, and the system (1) can also exploit/use the wind energy of weaker winds, which can be searched also at high altitudes.

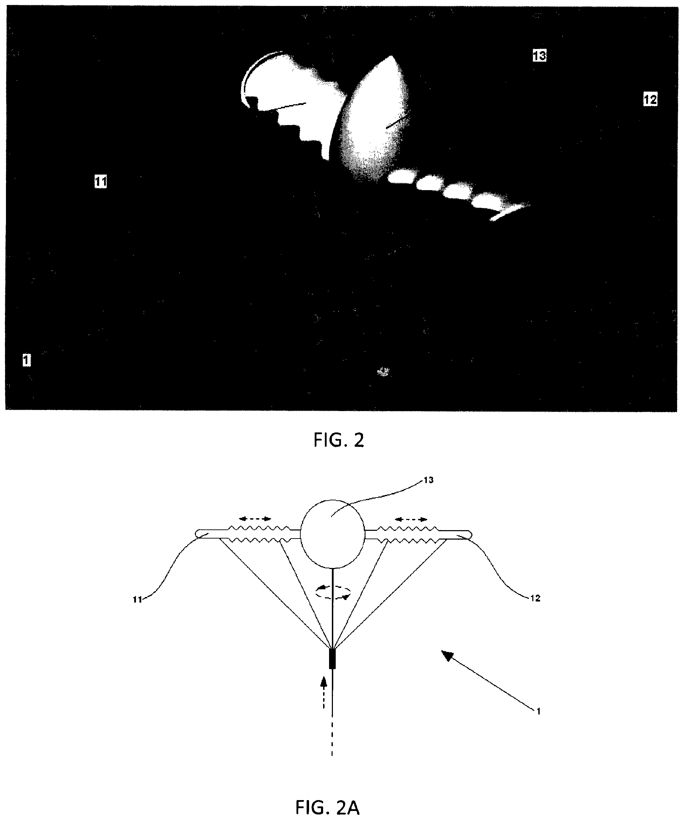

When the profiles (11, 12) are "partially" opened (Figures 2, 2a), namely are only partially extended, elongated, the rotating kite can exploit very strong winds, without risks for material resistance.

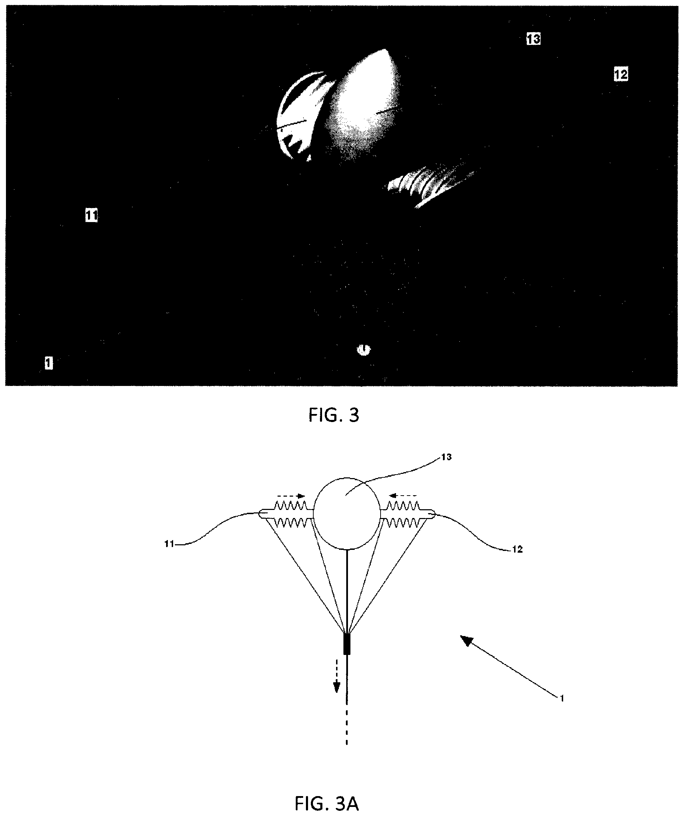

When the profiles (11, 12) are "closed" (Figure 3, 3a) inside the central room (13) of the system (1), namely are totally recovered, collected, in the central body/room (13), the kite will go down till the "cycle start" height or down to the ground level, if required.

The wing profiles (11, 12) of the system (1) go out and go in, totally or partially, of anf to the central room (13).

The central room (13) of the system (1) is preferably of a spherical or oval shape.

The central room/body (13) can be also composed of an aerostatic balloon adapted to keep the system at a height even when there is no wind.

When there is wind, the whole system, including the central room (13) and the constraining cables of the wing profiles, rotates around its own axis, while the ground constraining cable is connected with a rotary joint, so that there is no torsional effect of the cable during the rotation.

The rotation produces on the wing profiles (11, 12) a wind, which in aerodynamics is defined as "apparent", which determines the same lift effects which are obtained with a driven kite or with a system of rotary blades like those of an helicopter. The lift generated by the rotation, which has a force whose direction is opposite to the constraining point, is transmitted by the constraining cable to the system for converting mechanical energy (produced by the rotation due to wind) into electric energy, which is placed on the ground.

The system (1) can generate electric energy because the constraining cable is connected to an electric generator placed on the ground. Obviously, there can be other uses, such as, for example, the actuation of hydraulic pumps to remove salt or the lifting of liquid masses.

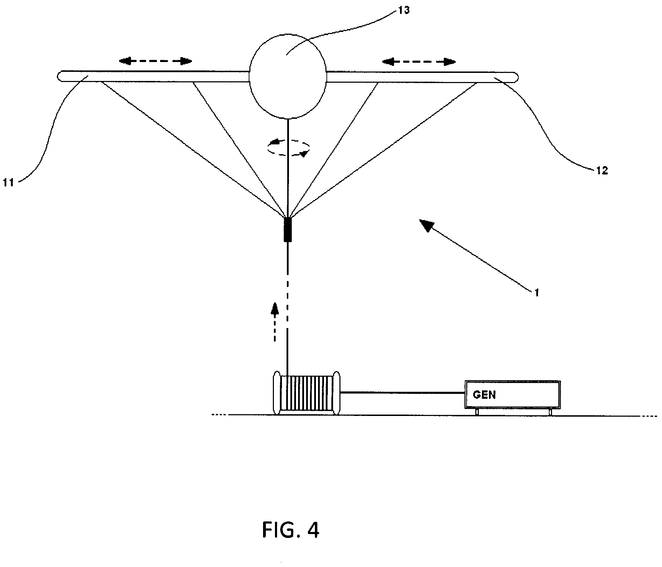

Electric energy is generated because the central room (13) of the rotating kite at a height is connected, through a cable wound onto pulleys, to a generator/alternator placed at ground level (Figure 4).

When there is no wind, there is no rotation of the rotating kite around its own axis and therefore there is no production of electric energy by the system (1).

The energy generating cycle, which is obtained during the "rise" at a height of the wing profiles (11,12), must be followed by a step of "returning" to the initial height with low energy consumptions.

## Claims

1. System (1) for generating electric energy by exploiting wind at a height, comprising at least one ultra-light component of the kite type, rotating, when there is wind, around its own axis and mainly composed of two or more retractable wing profiles (11, 12) which can be extended or retracted, totally or partially, through means placed inside a central housing (13) belonging to the rotating kite, thereby obtaining both the chance of rising or descending the rotating kite more easily and the capability of regulating/controlling the working surface of the wing profiles (11, 12) depending on a wind intensity, **characterized in that**, when there is wind, the wing profiles (11, 12) are totally opened, namely are completely extended or elongated, and the rotating kite will be adapted to exploit winds even of a small intensity by placing itself in a working cycle at high altitudes, while when the profiles (11, 12) are partially opened, namely they are extended or elongated, only partially, the rotating kite can remain operating and exploit also winds with strong intensity at low altitudes, while when the profiles (11,12) are closed inside the central housing (13), namely are totally recovered, collected, in the central body (13), the rotating kite will drop down till a working cycle initial level or to the ground.

2. System (1) according to claim 1, **characterized in that** the wing profiles (11, 12) go out and go in, totally or partially, of and in the central housing (13) of the rotating kite.

3. System (1) according to claim 1, **characterized in that**, when there is wind, the central housing (13) and the wing profiles (11, 12), mutually connected, rotate around their own rotation axis, generating apparent wind and consequent lift on the wing profiles (11,12).

4. System (1) according to claim 3, **characterized in that**, when there is wind, the central housing (13) and the wing profiles (11, 12) rotate around their own rotation axis, and electric energy is generated because the central housing (13) is connected, through cables which are not subjected to torsion, to an electric energy generator placed at ground level.

5. System (1) according to any one of the previous claims, **characterized in that** the central housing (13) has a spherical or oval shape.

6. System (1) according to any one of the previous claims, **characterized in that** the central housing (13) is composed of an aerostatic balloon capable of keeping at a height the rotating kite also when there is no wind.

## Patentansprüche

1. System (1) für die Stromerzeugung durch die Nutzung von Höhenwind, das mindestens eine ultraleichte Komponente enthält, wie einen sich um seine Achse drehenden Drachen, wenn Wind vorhanden ist, der hauptsächlich aus zwei oder mehreren einziehbaren Flügelprofilen (11, 12) besteht, die vollständig oder teilweise durch Vorrichtungen, die in einer zentralen, dem genannten sich drehenden Drachen angehörenden Aufnahme (13) angebracht sind, erweitert oder herausgenommen werden können, sodass es auf diese Weise sowohl einfacher ist, den sich drehenden Drachen auf- oder absteigen zu lassen, als auch, die Nutzfläche der Flügelprofile (11, 12) aufgrund der Windstärke einzustellen/zu kontrollieren, das **dadurch gekennzeichnet ist, dass**, wenn die Flügelprofile (11, 12) bei Vorhandensein von Wind vollständig geöffnet werden, d. h. vollständig erweitert oder verlängert werden, und der sich drehende Drachen dazu dienen wird, auch schwache Windstärken zu nutzen, indem er sich in einem Arbeitszyklus in hoher Höhe positioniert, während, wenn die Profile (11, 12) teilweise geöffnet werden, d. h. nur teilweise erweitert oder verlängert werden, der sich drehende Drachen in Betrieb bleiben und auch hohe Windstärken in niedriger Höhe nutzen kann, während, wenn die Profile (11, 12) in der zentralen Aufnahme geschlossen werden, d. h. vollständig im zentralen Körper (13) eingeholt, gesammelt werden, der sich drehende Drachen bis zur Anfangshöhe des Arbeitszyklus oder auf den Boden sinkt.

2. System (1) gemäß Patentanspruch 1, das **dadurch gekennzeichnet ist, dass** die Flügelprofile (11, 12) vollständig oder teilweise aus der und in die zentrale Aufnahme (13) des sich drehenden Drachens ein- und austreten.

3. System (1) gemäß Patentanspruch 1, das **dadurch gekennzeichnet ist, dass** die zentrale Aufnahme (13) und die Flügelprofile (11, 12), die miteinander verbunden sind, sich bei Vorhandensein von Wind um ihre Drehachse drehen und scheinbaren Wind und den folgenden Auftrieb auf den Flügelprofilen (11, 12) erzeugen.

4. System (1) gemäß Patentanspruch 3, das **dadurch gekennzeichnet ist, dass**, wenn sich die zentrale Aufnahme (13) und die Flügelprofile (11, 12) bei Vorhandensein von Wind um ihre Drehachse drehen, Strom erzeugt wird, weil die zentrale Aufnahme (13) durch Kabel, die keiner Torsion ausgesetzt werden, mit einem Stromgenerator verbunden ist, der in Höhe des Bodens positioniert ist.

5. System (1) gemäß einem beliebigen der vorhergehenden Patentansprüche, das **dadurch gekennzeichnet ist, dass** die zentrale Aufnahme (13) eine kugelförmige oder ovale Form hat.

6. System (1) gemäß einem beliebigen der vorhergehenden Patentansprüche, das **dadurch gekennzeichnet ist, dass** die zentrale Aufnahme (13) aus einem Ballon besteht, der fähig ist, den sich drehenden Drachen auch in der Höhe zu halten, wenn kein Wind vorhanden ist.

## Revendications

1. Système (1) pour la génération d'énergie électrique en exploitant le vent en altitude, comprenant au moins un composant ultra léger comme un cerf-volant, qui tourne, en présence du vent, autour de son axe et composé principalement de deux ou plusieurs surfaces portantes escamotables (11, 12) pouvant être étendues ou extraites, entièrement ou partiellement, grâce à un logement situé à l'intérieur d'un corps central (13) appartenant au cerf-volant tournant ; cela permet donc de faire monter ou descendre plus facilement le cerf-volant tournant, mais aussi de régler/contrôler la surface utile des surfaces portantes (11, 12) en fonction de l'intensité du vent ; **caractérisé en ce que** lorsque, en présence de vent, les surfaces portantes (11, 12) sont entièrement ouvertes, à savoir complètement étendues ou allongées, alors le cerf-volant sera apte à exploiter même des vents de faible densité en se positionnant dans un cycle de travail à haute altitude ; en revanche, quand les surfaces portantes (11, 12) sont partiellement ouvertes, à savoir étendues ou allongées en partie seulement, alors le cerf-volant pourra continuer à travailler et exploiter même des vents de forte intensité à faible altitude ; tandis que quand les surfaces portantes (11,12) sont renfermées à l'intérieur du corps central (13), à savoir entièrement récupérées et contenues dans le corps central (13), alors le cerf-volant descendra jusqu'au niveau de début du cycle de travail ou bien touchera le sol.

2. Système (1) selon la revendication 1, **caractérisé en ce que** les surfaces portantes (11, 12) sortent et rentrent, entièrement ou partiellement du/dans le corps central (13) du cerf-volant tournant.

3. Système (1) selon la revendication 1, **caractérisé en ce que**, en présence de vent, le corps central (13) et les surfaces portantes (11, 12), reliés entre eux, tournent autour de leur axe de rotation, en générant un vent apparent et la portance conséquente sur les surfaces portantes (11,12).

4. Système (1) selon la revendication 3, **caractérisé en ce que**, en présence de vent, lorsque le corps central (13) et les surfaces portantes (11, 12) tournent autour de leur axe de rotation, ils génèrent une énergie électrique parce que le corps central (13) est relié par des câbles, qui ne sont pas soumis à la torsion, à un générateur d'énergie électrique positionné au sol.

5. Système (1) selon l'une des revendications précédentes, **caractérisé en ce que** le corps central (13) est de forme sphérique ou ovale.

6. Système (1) selon l'une des revendications précédentes, **caractérisé en ce que** le corps central (13) est composé d'un ballon en mesure de maintenir en altitude le cerf-volant tournant même s'il n'y a pas de vent.
